# EUROPÄISCHE PATENTANMELDUNG

(11) **EP 1 351 040 A2**
(43) Veröffentlichungstag der Anmeldung: **08.10.2003**
(21) Anmeldenummer: 03090098.9
(22) Anmeldetag: 07.04.2003
(51) Int. Cl.: G01F 15/18

(54) **Armatur zum Einsetzen eines Absperrventils oder einer Durchsatzmesseinrichtung**

(30) Priorität: 07.04.2002 DE 10216189; 09.04.2002 DE 10215512; 27.08.2002 DE 10240344; 27.09.2002 DE 10246471; 04.02.2003 DE 10305458
(71) Anmelder: Sonje, Bernd, 42899 Remscheid (DE)
(72) Erfinder: Sonje, Bernd, 42899 Remscheid (DE)
(74) Vertreter: Heim, Johann-Ludwig, Dipl.-Ing.

(57) **Zusammenfassung**

Es wird ein in eine fluidführende Leitung ( 5 ) nach Einbringen eines Ventilgehäuses eingesetzter Ventileinsatz ( 150 ) zum Absperren des Fluids mit einem Gehäuse ( 2 ) behandelt, das zwei fluchtende Anschlussstutzen ( 7, 8 ) für Enden ( 78, 79 ) der Leitung ( 5 ) und einen weiteren Stutzen ( 14 ) für die Durchsatzmesseinrichtung ( 15 ) aufweist und welches einen Einsatz ( 80 ) aufnimmt, der die Anschlussstutzen ( 7, 8 ) unter Abdichten gegeneinander mit Anschlüssen der Durchsatzmesseinrichtung ( 15 ) verbindet. Der Einsatz ( 80 ) ist zweiteilig ausgebildet, besteht aus einem Ringschieber ( 18 ) und einem Umlenkstück ( 58 ), die beide zusammen eine über eine Nut-Steg-Verbindung ( 55/81 ) ineinandersteckbare Baugruppe bilden, die an mit einer Innenwand des Gehäuses ( 2 ) in Berührung kommenden Aussenflächen Nuten (50, 51 ) zur Einlage einer Dichtung ( 34 ) aufweist. Weiterhin wird eine Schleusenarmatur ( 83 ) für eine in eine fluidführende Leitung ( 5 ) einzusetzende Durchsatzmesseinrichtung ( 15 ) mit einem eine Absperrvorrichtung ( 96 ) aufnehmenden Kammergehäuse ( 84 ) und einem Anschlussflansch ( 87 ), der an einem Anschlussstutzen ( 14 ) des Gehäuses ( 2 ) angesetzt ist, beschrieben, bei der der Anschlussflansch ( 87 ) den Anschlussstutzen ( 14 ) umschliesst und mit wenigstens drei Vorsprüngen ( 90 ) versehen ist, die zwischen sich und dem Aussenumfang ( 93 ) des Anschlussstutzens ( 14 ) einen mit einer Schrägfläche versehenen Ring ( 92 ) lagern, der von in den Vorsprüngen ( 90 ) gelagerten Stellschrauben ( 91 ) hintergriffen ist.

## Beschreibung

Die vorliegende Erfindung bezieht sich auf ein in eine fluidführende Leitung einzusetzendes Absperrventil oder eine einzusetzende Durchsatzmesseinrichtung für das Fluid mit einem Gehäuse und auf eine Schleusenarmatur gemäss den einleitenden Teilen der unabhängigen Ansprüche.

Aus dem DE 299 07 075 U1 ist eine gattungsgemässe Einrichtung bekanntgeworden, die nachträglich in die fluidführende Leitung einzusetzen ist, wobei eine Ventilarmatur vorgesehen ist, die aus zwei Endarmaturen besteht, die ihrerseits in einer zur Achse der fluidführenden Leitung fluchtenden Ebene längsgeteilt sind und mit einem u-förmigen Bügel unlösbar miteinander verbunden sind, der zur Distanzhaltung für den Abstand der Endarmaturen dient, damit zwischen sie die Durchsatzmesseinrichtung nach Durchtrennen der fluidführenden Leitung eingesetzt werden kann. Die beiden Teile der Endarmaturen sind miteinander durch eine Schraubverbindung verbunden. Die Endarmaturen nehmen Absperrventile für die Montage der Durchsatzmesseinrichtung auf.

Darüber hinaus ist aus der DE 198 27 992 A1 eine weitere gattungsgemässe Einrichtung bekanntgeworden, die nachträglich in die fluidführende Leitung einzusetzen ist, wobei eine mit einem einteiligen Gehäuse versehene Ventilarmatur vorgesehen ist, die zwei mit der fluidführenden Leitung fluchtende und einen senkrecht dazu stehenden Anschluss aufweist, der die Durchsatzmesseinrichtung aufnimmt, wozu ein zweiteiliger Einsatz in das Gehäuse eingebracht ist, der die Anschlüsse der Durchsatzmesseinrichtung mit denen der Leitung gegeneinander mittels einer Zwischenwand abdichtend verbindet. Wie die Abdichtung des Gehäuses gegenüber der fluidführenden Leitung erfolgt, bleibt offen, genauso, wie die Abdichtung des Gehäuses gegenüber der Durchsatzmesseinrichtung erfolgt und auch über die Abdichtung der Teile des Einsatzes gegeneinander sowie gegenüber den Anschlüssen der Durchsatzmesseinrichtung findet sich nichts.

Der Stand der Technik gibt somit wenig praxisorientierte Informationen zur Ausbildung der Einrichtung, die sich immerhin im rauhen Montagebetrieb auf der Baustelle bewähren muss und bei der die Leckagefehler zu vermeiden sind, weil sie sich über die langen Einsatzzeiträume zu Lasten des das Fluid zur Benutzung stellenden Anbieters kumulierend auswirken.

Ferner ist aus der WO 99/50584 eine Vorrichtung zum nachträglichen Einbau eines Fluidzählers in eine unter Druck stehende Rohrleitung bekannt geworden, die eine Schleusenarmatur aufweist. Diese Schleusenarmatur ist Teil einer Abzweigarmatur mit einem Abzweigstutzen und einem strömungslenkenden Einsatz, dessen Abzweigstutzen ein Innengewinde aufweist, das mit einem Aussengewinde am Fluidzähler korrespondiert. Die Abzweigarmatur besitzt zwei auf die Rohrleitung dicht aufsetzbare Rohrstutzen, die beide längs der Rohrleitung geteilt sind und einen mit einem Aussengewinde versehenen Abzweigstutzen, auf das die eigentliche Schleusenarmatur aufgeschraubt ist, die einen abnehmbaren Deckel mit einem Führungsstutzen besitzt, welche eine Betätigungsstange führt, an der ein Fräser oder der Fluidzähler mittels einer Haltevorrichtung anbringbar ist. Ein von aussen betätigbares Ventil soll in die Abzweigarmatur nicht eingesetzt werden. Bedingt durch die engkanaligen Umlenkungen im Bereich der Abzweigarmatur ist der Strömungswiderstand für das in seinem Durchsatz zu messende Fluid sehr hoch.

Die Erfindung stellt sich somit die Aufgabe, eine praxisgerechte Einrichtung der eingangs näher bezeichneten Art zu schaffen, die es schafft, ein von aussen betätigbares Ventil in die Abzweigarmatur einzusetzen und Leckagefehler eliminiert.

Diese Aufgabe wird erfindungsgemäss bei einer Einrichtung der eingangs näher bezeichneten Art durch die kennzeichnenden Merkmale der unabhängigen Ansprüche gelöst. Hierbei tritt einerseits der Vorteil signifikant in Erscheinung, dass nach dem Anbringen des Gehäuses an der fluidführenden Leitung die Elemente des Einsatzes in dieses eingesteckt werden, wobei die Elemente des Einsatzes mit den dazu benötigten Dichtungen vorab versehen werden, was nicht auf der Baustelle geschehen muss. Anschliessend wird nur noch eine Absperreinheit über eine Schleuseneinrichtung eingebaut oder in einem anderen Anwendungsfall die Durchsatzmesseinrichtung in den freien hierfür vorgesehenen Stutzen eingeschraubt. Mit dem Trennen der fluidführenden Leitung und dem Anbringen des Gehäuses an deren freien Enden befassen sich die Merkmale des zweiten unabhängigen Anspruches und lösen hier andererseits insbesondere das Problem der Anbringung und des Lösens der Schleusenarmatur. Völlig unabhängig davon kann in die unter Druck stehende Leitung ein Absperrventil eingebracht werden, dass von aussen frei zugänglich bedienbar ist.

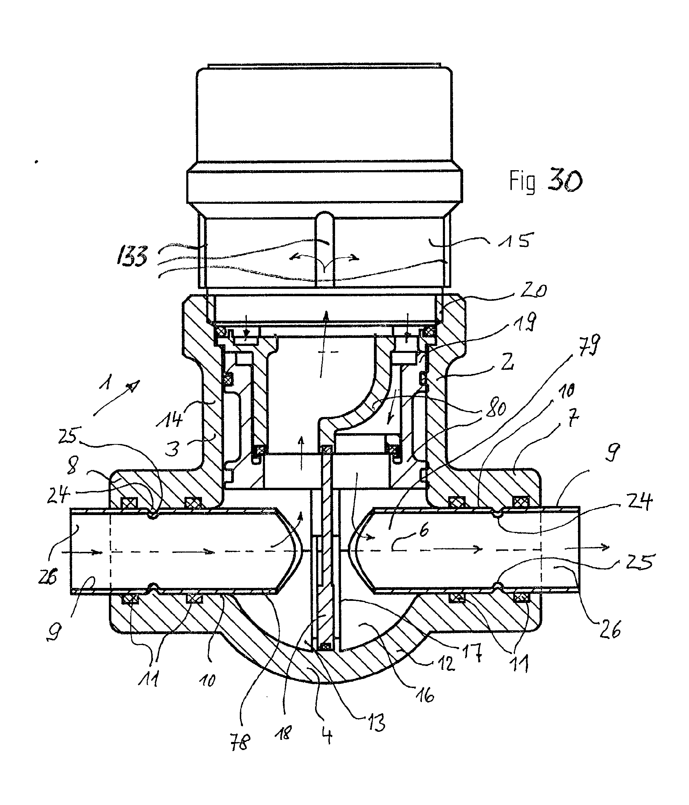

Die Erfindung wird ergänzt und weiter ausgestaltet durch die Merkmale der abhängigen Ansprüche. Ausführungsbeispiele der Erfindung werden nachfolgend anhand der Figuren 1 bis 42 der Zeichnungen näher erläutert.

Es zeigen:
- Fig. 1: einen Schnitt durch die Einrichtung mit einem Ventil,
- Fig. 2: einen Schnitt durch die Einrichtung mit einem Zähler,
- Fig. 3: eine Schleuseneinrichtung,
- Fig. 4: eine Aussenansicht auf ein Unterteil des Gehäuses,
- Fig. 5: eine Innenansicht auf das Unterteil des Gehäuses,
- Fig. 6: eine Seitenansicht des Unterteiles des Gehäuses,
- Fig. 7: eine Innenansicht auf das Oberteil des Gehäuses,
- Fig. 8: eine Aussenansicht auf das Oberteil des Gehäuses,
- Fig. 9: einen Schnitt durch das Oberteil des Gehäuses,
- Fig. 10: einen Schnitt senkrecht zur Darstellung nach Fig. 9,
- Fig. 11: eine Dichtung in einer Perspektivansicht,
- Fig. 12: die Dichtung nach Fig. 11 in einer Seitenansicht,
- Fig. 13: eine weitere Dichtung in einer Perspektivansicht,
- Fig. 14: die Dichtung nach Fig. 13 in einer Seitenansicht,
- Fig. 15: die Dichtung nach Fig. 14 in einer anderen Ansicht,
- Fig. 16: einen Ringschieber in einer Perspektivansicht,
- Fig. 17: einen Schnitt durch den Ringschieber,
- Fig. 18: eine Seitenansicht des Ringschiebers,
- Fig. 19: eine weitere Seitenansicht des Ringschiebers,
- Fig. 20: ein Umlenkstück in einer Perspektivansicht,
- Fig. 21: einen Schnitt durch das Umlenkstück,
- Fig. 22: eine Stirnseitenansicht des Umlenkstückes,
- Fig. 23: eine weitere Seitenansicht des Umlenkstückes,
- Fig. 24: eine dritte Seitenansicht des Umlenkstückes,
- Fig. 25: eine Dichtung in einer Seitenansicht,
- Fig. 26: einen Schnitt durch einen ersten Träger,
- Fig. 27: einen Schnitt durch einen zweiten Träger,
- Fig. 28: einen Schnitt durch einen Flansch,
- Fig. 29: eine Seitenansicht des Flansches,
- Fig. 30: einen Schnitt durch die Einrichtung mit um 90° gedrehtem Umlenkstück,
- Fig. 31: eine Variante eines Deckels,
- Fig. 32: eine Variante zur Dichtung nach Fig. 11,
- Fig. 33: die Variante der Dichtung in einer Seitenansicht,
- Fig. 34: eine Variante zur Dichtung nach Fig. 13,
- Fig. 35: die Variante der Dichtung in einer Seitenansicht,
- Fig. 36: die Dichtung in einer weiteren Seitenansicht,
- Fig. 37: eine Variante des Ringschiebers nach Fig. 16 in einer Perspektivansicht,
- Fig. 38: den Ringschieber nach Fig. 37 in einem Schnitt,
- Fig. 39: den Ringschieber nach Fig. 37 in einer Seitenansicht,
- Fig. 40: den Ringschieber nach Fig. 37 in einer weiteren Seitenansicht,
- Fig. 41: einen Schnitt durch die Einrichtung nach Fig. 30 mit um 90° gedrehtem Umlenkstück und
- Fig. 42: eine Aussenansicht der Einrichtung.

In allen 42 Figuren bedeuten gleiche Bezugszeichen jeweils die gleichen Einzelheiten.

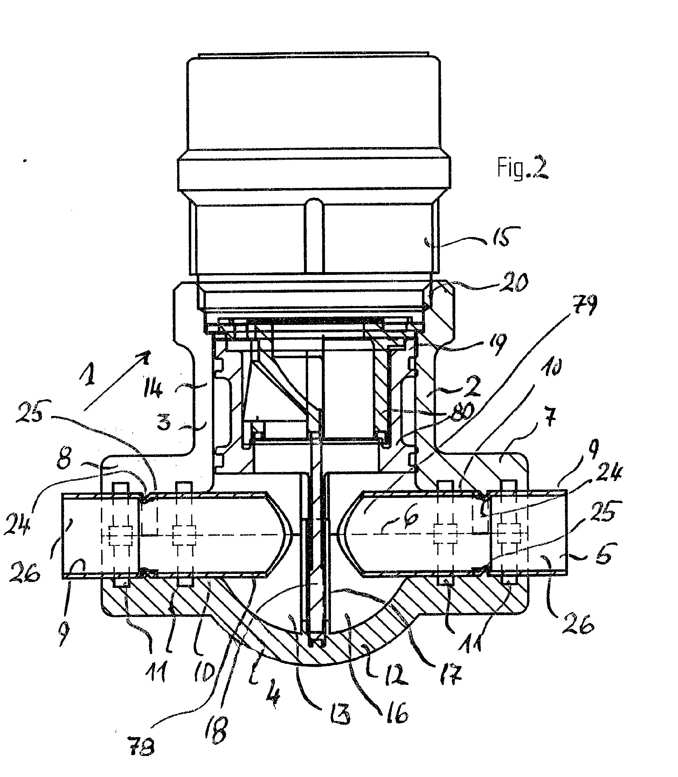

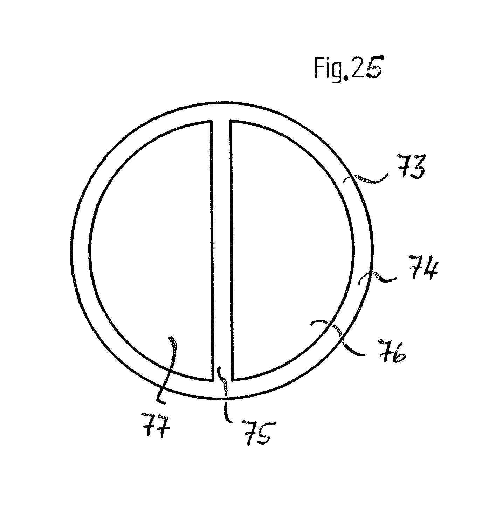

Eine Einrichtung 1 weist ein Gehäuse 2 auf, das aus einem in einer Trennebene 6 sich berührenden Oberteil 3 und einem Unterteil 4 besteht, die beide auf eine ein Fluid - hier Gas oder Brauchwasser - führende Leitung 5 montiert werden, indem hierzu unter Beibehaltung des Druckes in der fluidführenden Leitung 5 eine Schleusenarmatur gemäss Fig. 2 und deren Spezialteile gemäss den Figuren 25 bis 28 verwendet werden. Ober- und Unterteil des Gehäuses 2 formen zusammen hälftig zwei mit einander und der Leitung 5 fluchtende Anschlussstutzen 7 und 8, die die Leitung druckdicht umschliessen. Hierzu weisen sie auf ihren der äusseren Rohrwandung 9 der Leitung 5 zugewandten Innenmantelzylinderteilflächen 10 je Anschlussstutzen 7 und 8 je zwei Ringnuten 11 auf, in die eine später noch zu beschreibende Dichtung eingelegt wird.

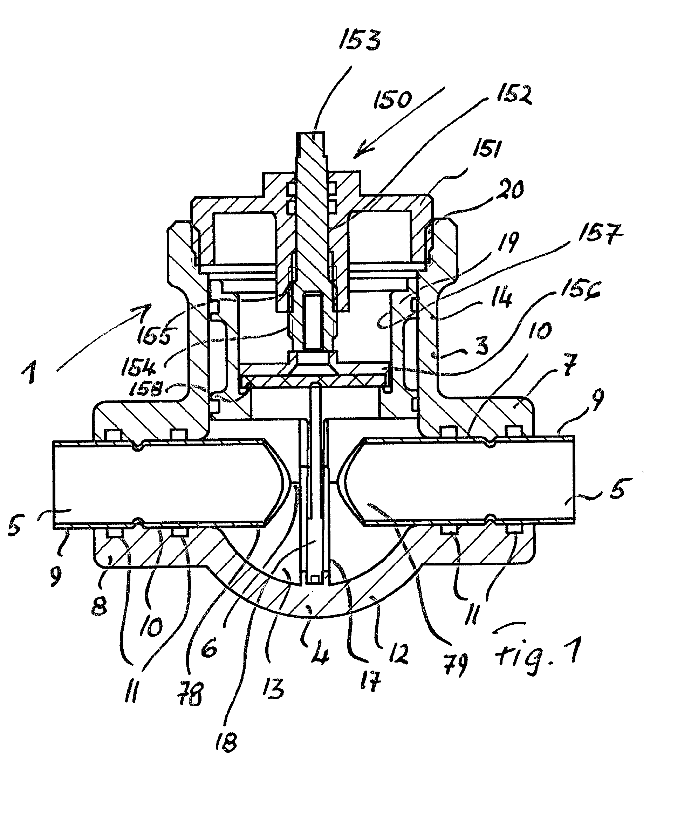

Das Unterteil 4 weist etwa mittig eine kugelabschnittförmige Erweiterung 12 auf, die einen zentralen Innenraum 13 nach unten abschliesst. Dem Innenraum 13 nach oben gegenüberliegend ist ein weiterer Anschlussstutzen 14 vorgesehen, der senkrecht zu den beiden Anschlussstutzen 7 und 8, die Enden 78 und 79 der Leitung 5 druckdicht umschliessen, steht und zur Aufnahme eines Ventileinsatzes 150 nach Figur 1 oder einer als Wasseruhr ausgebildeten ihrerseits Anschlüsse aufweisenden Durchsatzmesseinrichtung 15 nach Fig. 2 dient, wobei der Anschlussstutzen 14 in seinem Durchmesser wesentlich grösser gehalten ist als die beiden anderen Anschlussstutzen 7 und 8. An einer Innenwand 16 der kugelabschnittförmigen Erweiterung 12 ist eine sich mittig zum und in Richtung auf den Anschlussstutzen 14 erstreckende Nut 17 vorgesehen, die einen Ringschieber 18 druckdicht lagert. Dieser Ringschieber 18 besitzt einen Ringzylinderkopf 19, der in den Anschlussstutzen 14 eingeschoben ist, der an dem dem Ventileinsatz 150 oder der Durchsatzmesseinrichtung 15 zugewandten Ende ein Innengewinde 20 besitzt, in das ein Gewindestutzen 151 des Ventileinsatzes 150 oder der Durchsatzmesseinrichtung 15 eingeschraubt ist. Der Ventileinsatz 150 lagert in einer Bohrung 152 des Gewindestutzens 151 eine Ventilstange 153, die ein Aussengewinde 154 aufweist, das in einem Innengewinde 155 der Bohrung 152 gelagert ist und die an ihrem in den Anschlussstutzen 14 eintauchende Ende einen mit einer Dichtung versehenen Ventilkörper 156 trägt, der gegen einen am Innenmantel 157 des Ringzylinderkopfes 19 angeformten Ventilsitz 158 bewegt werden kann.

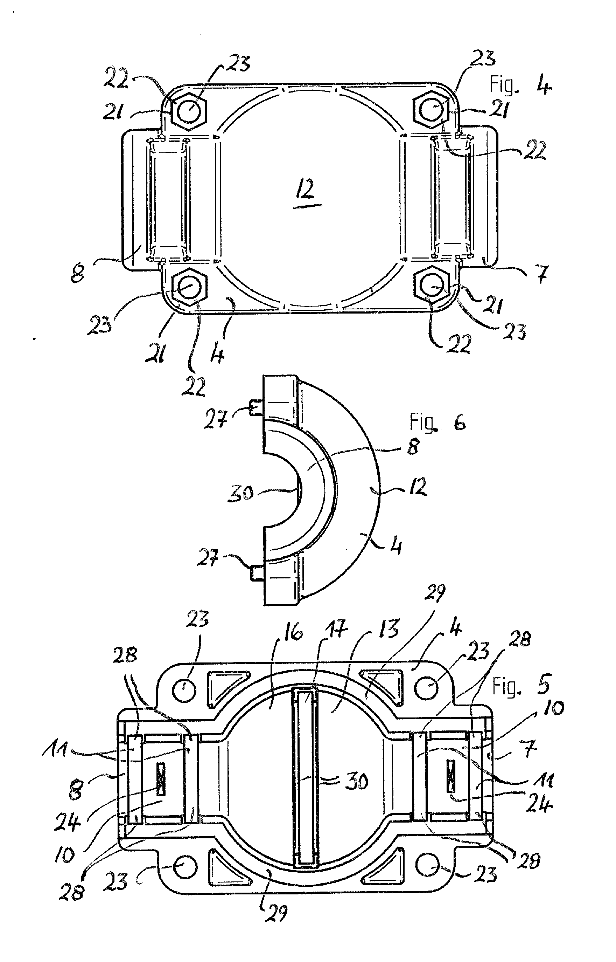

Von unten her gesehen, weist das Gehäuseunterteil 4 Rechteckform auf, was Fig. 4 darstellt, wobei die Projektionen der Anschlussstutzen 7 und 8 über die Schmalseiten des Rechteckes hervorragen. In den Ecken des Rechteckes sind mit weitergehenden Bohrungen 23 versehene Sechskantausnehmungen 21 vorgesehen, in die Sechskantmuttern 22 eingelegt sind.

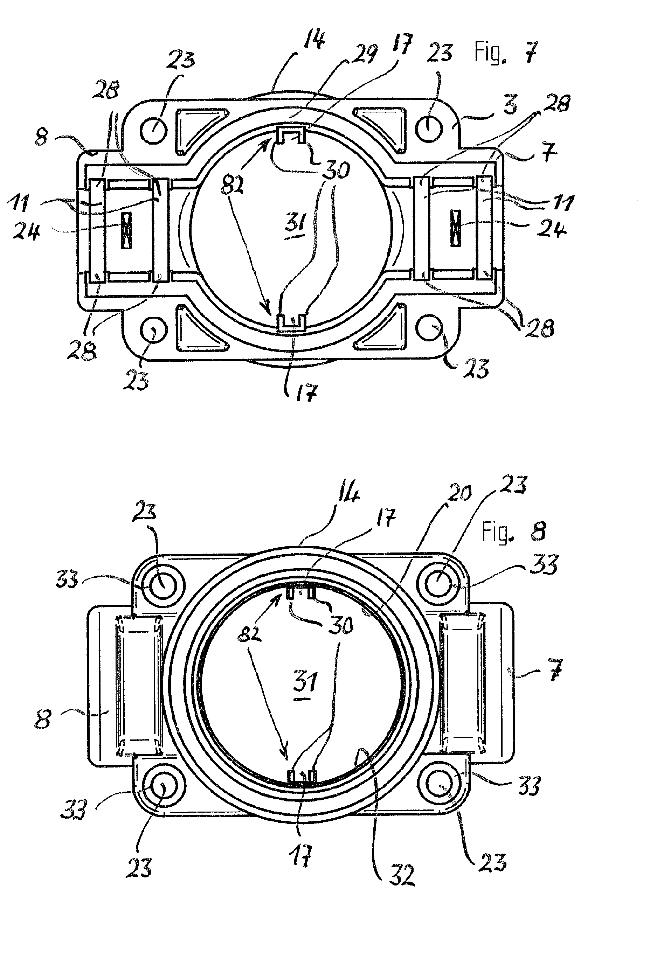

Fig. 5 lässt die Ausbildung des Innenraumes 13 mit seiner Nut 17 gut erkennen, die sich quer und im 180°-Bogen zu der die fluchtenden Anschlussstutzen 7 und 8 verbindenden Achse erstreckt. Gleichfalls ist die Ausformung der vier Ringnuten 11 erkennbar, die parallel und im Abstand zu sich und der Nut 17 angeordnet sind. Zwischen je einem Paar dieser Ringnuten 11 befindet sich eine Klemmnase 24, die in eine Ringnut 25 im die fluidführende Leitung 5 bildenden Rohr 26 einfährt.

Fig. 6 demonstriert die Lage zweier Vorsprünge 27, die einstückig an das Unterteil angeformt sind und die in entsprechende Löcher bildende Freiformungen 82 im Oberteil einfahren, um die Lage von Ober- zu Unterteil zu positionieren, bevor letztlich Schrauben in die Sechskantmuttern 22 einfahren.

Die vier Ringnuten 11 sind an ihren Enden 28 mit zwei Längsnuten 29 verbunden, so dass deren Vertiefungen durchgängig sind und eine einstückige Dichtung, die später noch zu beschreiben sein wird, aufnehmen. Die Nut 17 ist von zwei in den Innenraum 13 vorstehenden Stegen 30 begrenzt.

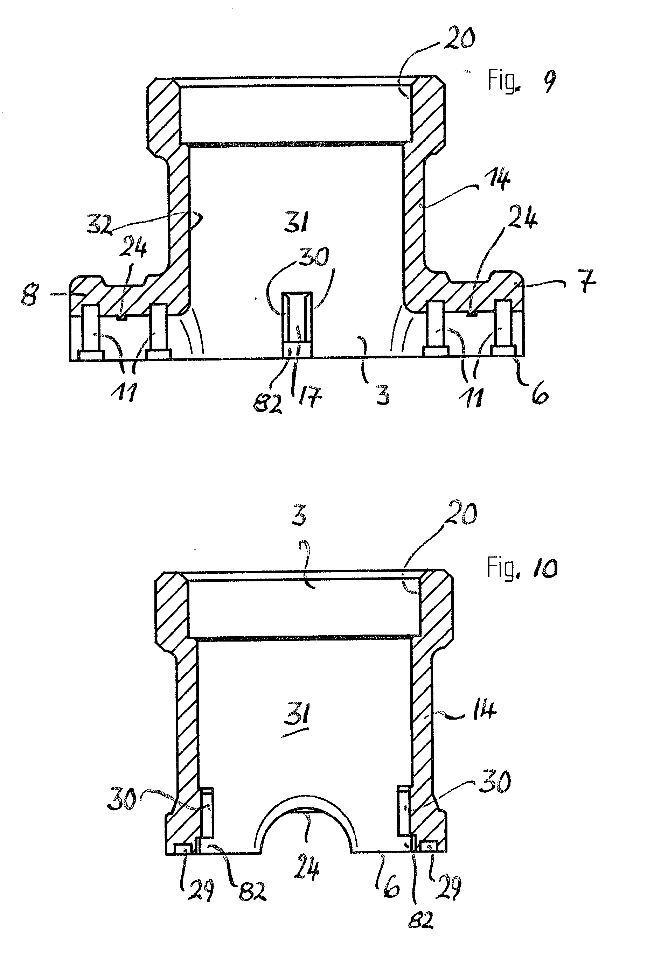

Anhand der Fig. 7 wird nun die Ausformung des Innenraumes 31 des Oberteiles 3 des Gehäuses 2 erläutert: Die dem Unterteil 4 gleichen Elemente sind hier gleich positioniert. So finden sich die Ringnuten 11 mit der dazwischenliegenden Klemmnase 24, die beiden Längsnuten 29, in die die Enden 28 der Ringnuten 11 münden, die von den Stegen 30 eingeschlossene sich aber als gerader Verlauf in Richtung auf den Anschlussstutzen 14 erstreckende Nut 17 und die Löcher 23. Hierüber hinaus zeigt die Fig. 8 die Lage und Ausbildung des Innenraumes 31 als Stufenzylinder, mit seiner Innenwand 32, die am Abschluss des Anschlussstutzens 14 das Innengewinde 20 trägt. Die Bohrungen 23 tragen aussen Zylindersenkungen 33 für Schraubenköpfe. Die Fig. 9 und 10 komplettieren die Ansichten der verschiedenen Einzelheiten am und im Oberteil 3 des Gehäuses 2.

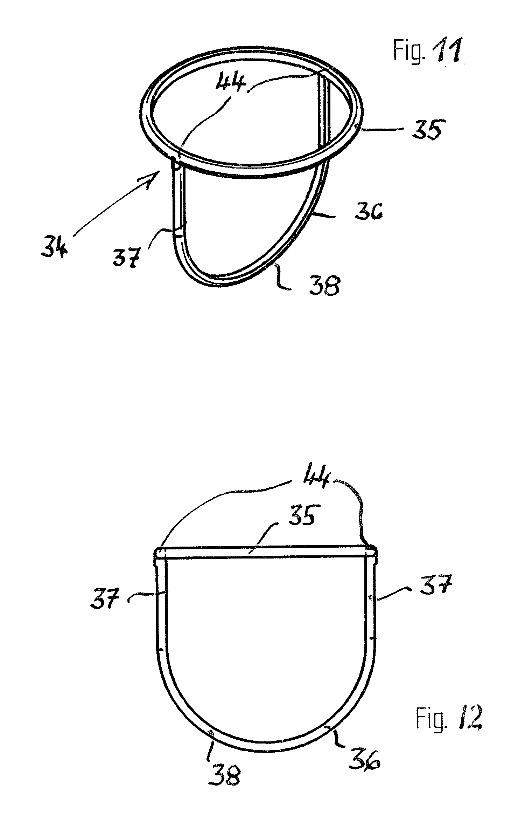

Eine netzartige Dichtung 34 aus Rundgummi oder -kunststoff stellen die Fig. 11 und 12 heraus. Sie weist maulkorbartige Ausgestaltung auf und besteht aus einem Ringkreisteil 35 mit einem diametral an den Ring angesetzten Bügel 36, der seinerseits aus zwei geraden Formstücken 37 mit sie verbindendem 180°-Kreisbogen 38 besteht.

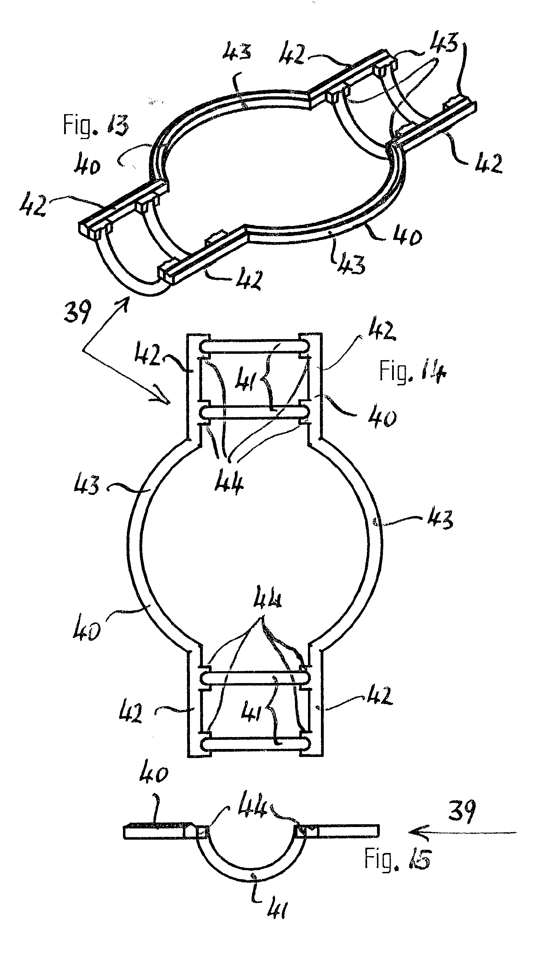

Eine weitere netzartige Dichtung 39 aus Rundgummi oder -kunststoff stellen die Fig. 13 bis 15 heraus. Diese besteht aus zwei Längsstükken 40, die über vier Stege 41 in Abständen miteinander verbunden sind, wobei die Abstände denen der Ringnuten 11 entsprechen. Die Längsstücke 40 weisen an ihren Enden zwei gerade Bereiche 42 auf, die jeweils mittels der halbkreisartig ausgeformten Stege 41 verbunden sind, die untereinander mit zwei Bogenelementen 43 in Verbindung stehen. Die Ausformung der Längsstücke 40 und ihre Abstände entsprechen den Längsnuten 29 und ihren Abständen. Alle Verbindungsstellen 44 zwischen Formteilen der Dichtungen 34 und 39 sind verdickt ausgeführt.

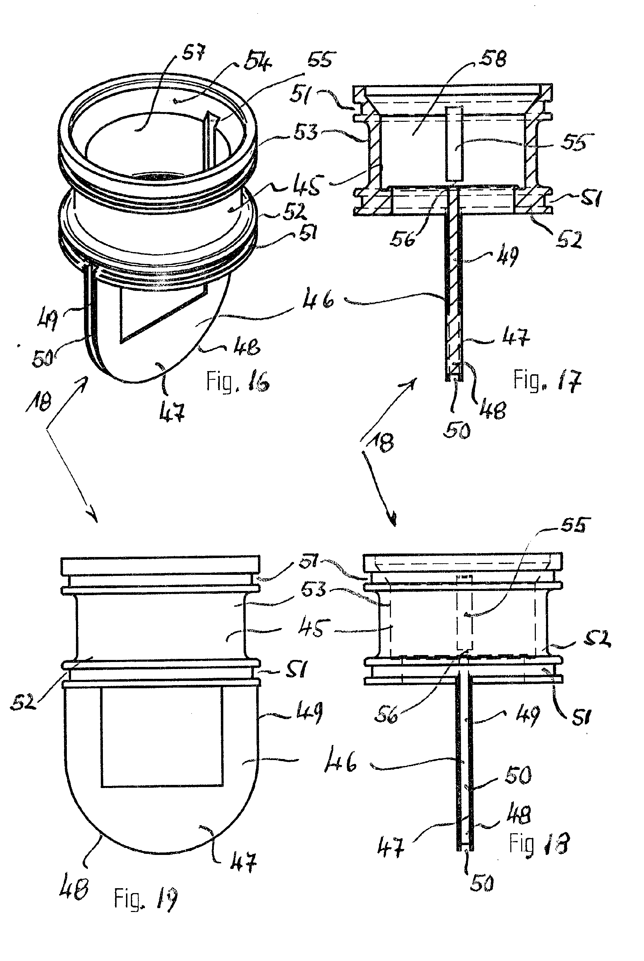

Nunmehr wird die Ausgestaltung des Ringschiebers 18, der zusammen mit einem Umlenkteil 58 einen Einsatz 80 als Baugruppe bildet, anhand der Fig. 16 bis 19 näher erläutert: Er weist ein Ringzylinderteil 45 und ein Trennteil 46 auf, wobei letzteres senkrecht und diametral auf einer Stirnseite von ersterem aufsteht. Das Trennteil 46 besitzt Rechteckform mit am freien Ende aufgesetztem Halbzylinder 47, wobei der Durchmesser des Zylinders gross gegenüber seiner Dicke ist. Die sich über einen Bogen von 180° erstreckende Halbzylindermantelfläche 48 und auch die sich in Richtung auf das Ringzylinderteil 45 anschliessende Rechteckfläche 49 weisen eine Durchgangsnut 50 auf, die in eine Kreisnut 51 übergeht, die in dem dem Trennteil 46 zugewandten unteren Bereich 52 des Ringzylinderteiles 45 aussen an dessen Mantelfläche 53 eingearbeitet ist. Eine weitere der ebengenannten gleiche Kreisnut 51 findet sich am oberen, dem Trennteil 46 abgewandten Ende des Ringzylinderteiles 45. In eine Innenmantelfläche 54 des Ringzylinderteiles 45 des Ringschiebers 18 ist eine Führungsnut 55 eingelassen, die sich in Richtung des Trennteiles 46 erstreckt aber im Abstand 56 vor ihm von oben gesehen, endet. In die Kreisringnut 51 zusammen mit der Durchgangsnut 50 passt die in Fig. 11 und 12 dargestellte Dichtung 34, in die isolierte Kreisringnut 51 am oberen Ende des einen Aufnahmeraum 57 umschliessenden Ringzylinderteiles 45 eine einfache Ringdichtung.

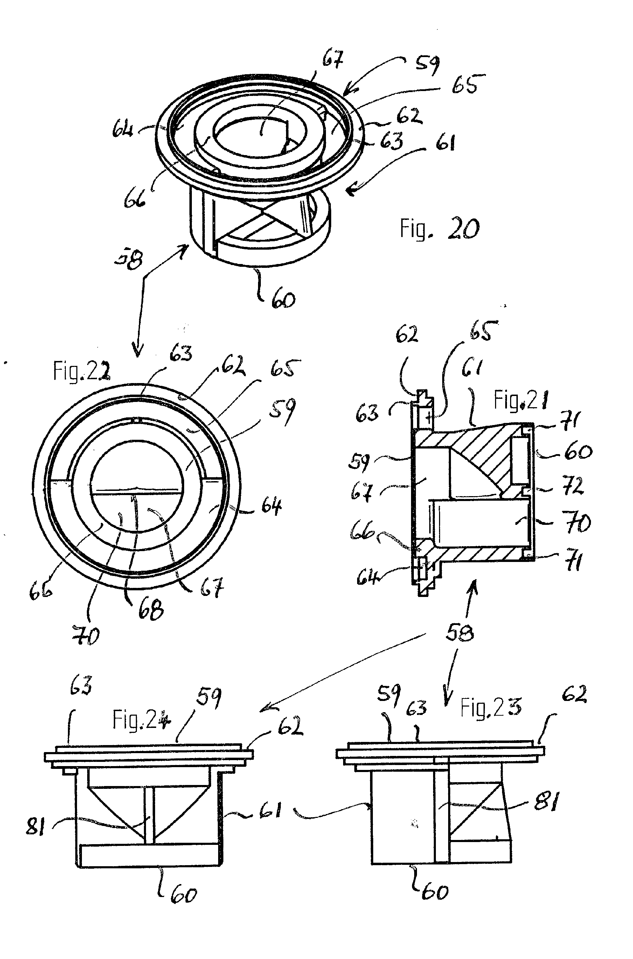

Dieser Aufnahmeraum 57 lagert ein Umlenkteil 58, dessen Gestalt aus den Darstellungen der Fig. 20 bis 24 hervorgeht:

Er weist die Form eines Stufenringzylinders auf und damit zwei Stirnflächen 59 und 60, die über einen Verbindungsbereich 61 verbunden sind. Die Stirnfläche 59 weist - von der Peripherie nach innen gesehen - einen Ringflansch 62 auf, an den sich ein Ringsteg 63 anschliesst. Hieran schliesst sich eine Vertiefungsnut 64 an, die etwas mehr als halbzylindrisch gestaltet ist. Der Ergänzungsbereich zum Halbzylinder ist von einem Durchlass 65 gebildet. Hierauf folgt eine Ringdichtfläche 66, in derem Zentrum sich ein Zylinderloch 67 befindet. Dieses Zylinderloch 67 erstreckt sich axial zu einem halbkonischen Raum übergehend zum Halbzylinder, begrenzt durch eine axiale Trennwand 68. Dieser Halbzylinderquerschnitt 70 einerseits und der Durchlass 65 andererseits, bilden zwei Kanäle, die sich getrennt von einander zwischen beiden Stirnflächen 59 und 60 erstrecken. Die Stirnfläche 60 besitzt eine Ringnut 71 mit einer diagonalen Längsnut 72. Der Verbindungsbereich weist einen sich in Richtung beider Stirnflächen 59 und 60 erstreckenden Steg 81 auf.

Die in der Fig. 25 dargestellte Dichtung 73 weist Ringform 74 mit diametralem Steg 75 auf und besteht aus Rundgummi oder -kunststoff. Sie besitzt somit zwei gleichgrosse halbzylindrische Durchlässe 76 und 77, die den freien Räumen der Kanäle 65 und 70 entsprechen und wird in die Ringnut 71 der Stirnfläche 60 eingelegt.

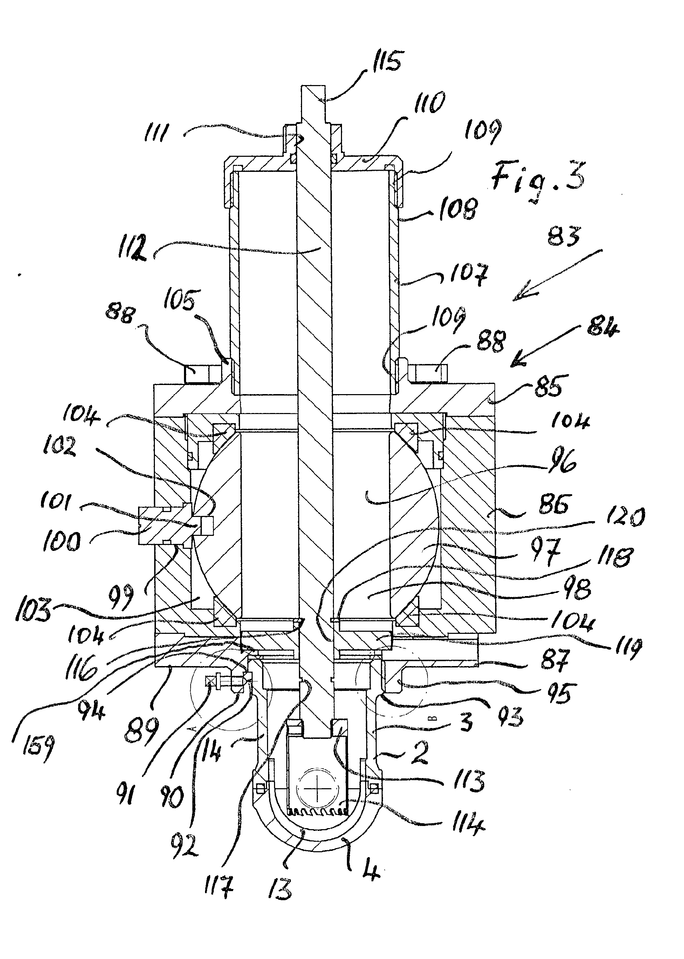

Die in der Fig. 3 dargestellte Schleusenarmatur 83 ist auf das Gehäuse 2 aufgesetzt und zwar auf den Anschlussstutzen 14 des Oberteiles 3. Die Schleusenarmatur 83 besteht aus einem Kammergehäuse 84, das sich aus einem Deckel 85, einem Hohlzylinderwandstück 86 und einem Anschlussflansch 87 zusammensetzt, die alle mit sie durchgreifenden Schrauben 88 verbunden sind. Für den Anschlussflansch existieren zwei Varianten, die mit A und B in der Figur 2 markiert sind, mit denen er mit seiner dem Hohlzylinderwandstück 86 abgewandten Stirnfläche 89 am freien Ende des Anschlussstutzens 14 befestigt ist: Nach Variante A sind an der Stirnfläche 89 über den Umfang regelmässig verteilt wenigstens drei Vorsprünge 90 angeordnet, durch die Stellschrauben 91 greifen, welche mit ihren Enden einen Ring 92 hintergreifen, der zwischen dem Aussenumfang 93 des Anschlussstutzens 14 und dem Innenumfang eines von allen Vorsprüngen 90 definierten Kreises liegt und eine zu den Enden der Schrauben geneigte Schrägfläche aufweist, die von den angespitzten Enden aller Stellschrauben hintergriffen wird. Gegenüber der geneigten Schrägfläche weist der Ring 92 eine Kreisringstirnfläche auf, die an einer sowohl vom Anschlussflansch 87 an der Stirnfläche 89 als auch vom Anschlussstutzen 14 des Oberteiles 3 an dessen Aussenumfang 93 gebildeten Dachfläche 94 anliegt.

Nach der Alternative B weist der Anschlussflansch 87 an der Stirnfläche 89 einen Ringstutzen 95 auf, der ein Innengewinde trägt, in das ein am Aussenumfang 93 des Anschlussstutzens 14 angeordnetes Aussengewinde eingeschraubt ist.

Das Kammergehäuse 84 ist Teil eines Kugelhahnes 96 und umschliesst einen Kugelkörper 97, der eine Durchgangsbohrung 98 besitzt. Das Kammergehäuse 84 weist im Bereich des Hohlzylinderwandstückes 86 eine Seitenbohrung 99 auf, in der eine Handhabe 100 zum Verdrehen des Kugelkörpers 97 gelagert ist, indem sie mit einem Steg 101 in einen Schlitz 102 an der Wandung des Kugelkörpers 97 eingreift. Im Innenraum 103 des Kammergehäuses 84 sind Dichtführungsringe 104 gelagert, die den Kugelkörper 97 dichtend führen.

Am Deckel 85 des Kammergehäuses 84 ist ein Abgangsstutzen 105 vorgesehen, der ein Innengewinde 106 aufweist, in das ein Aufsatz 107 eingeschraubt ist. Dieser ist als glatter Zylinder ausgeformt, der an seinem dem Deckel 85 des Kammergehäuses 84 abgewandten Ende 108 gleichfalls ein Aussengewinde 109 aufweist, auf das ein mit einem Innengewinde versehener Führungsdeckel 110 aufgeschraubt ist, der eine Führung 111 für eine Stange 112 besitzt. Diese Stange 112 reicht bis in den Innenraum 14 des Gehäuses 2, trägt abnehmbar über einen Gewindeansatz einen Fräser 114 und ist an ihrem dem Gewindeansatz abgewandten Ende 115 mit einem Einspannfutter einer Bohrmaschine verbindbar.

Die Stange 112 weist in der Nähe des den Träger 113 des Fräsers 114 tragenden Endes im Abstand zwei Ringnuten 116 und 117 auf, wobei im Falle des Tragens des Fräsers 114 in die vom Träger 113 weiter entfernte Nut ein Ring 118 eingesetzt ist, der zum Definieren der tiefsten Positionierstelle des Fräsers 114 gegen eine Führungsscheibe 119 fährt, die an den Anschlussflansch 87 des Kammergehäuses 84 anschlägt und eine zentrale Ausnehmung 120 aufweist, die die Stange 112 führt. Ein anderer Anschlag zum Begrenzen der Axialverschieblichkeit der auf der Stange 112 auch drehbar gelagerten Führungsscheibe 119 ist durch eine Verengung 159 im Innenraum 160 des Kammergehäuses 84 gegeben, wobei der Innenraum durch je eine Bohrung im Deckel 85, im Hohlzylinderwandstück 86 oben und unten und im Anschlussflansch 87, die alle miteinander fluchten, definiert ist.

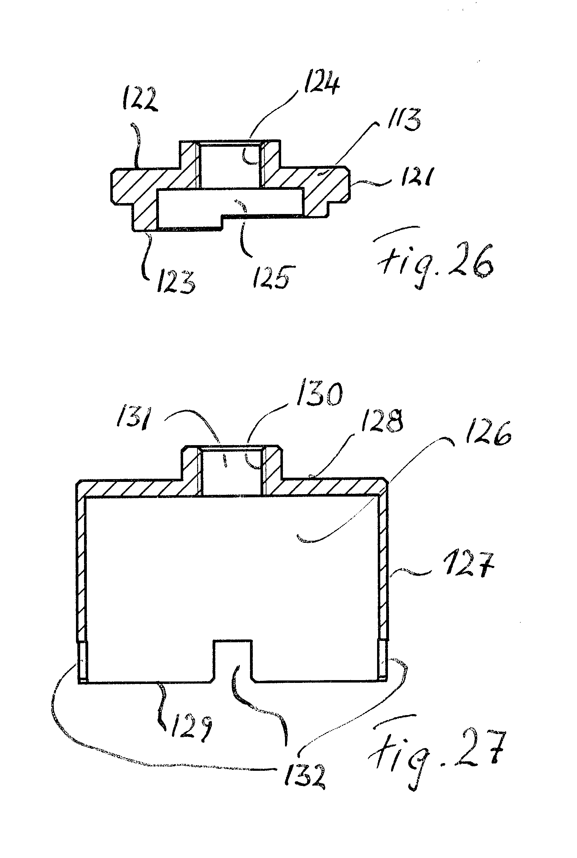

Der Träger 113 des Umlenkteiles 58 ist in Figur 26 dargestellt: Er ist als Ringzylinderkörper gestaltet, weist einen Zylindermantel 121 auf, der zwei sich gegenüberliegende Stirnflächen 122 und 123 ausbildet und der eine mit Innengewinde 124 versehene Durchgangsbohrung 125 umgibt. In das Innengewinde 124 wird der Gewindeansatz der Stange 112 eingeschraubt.

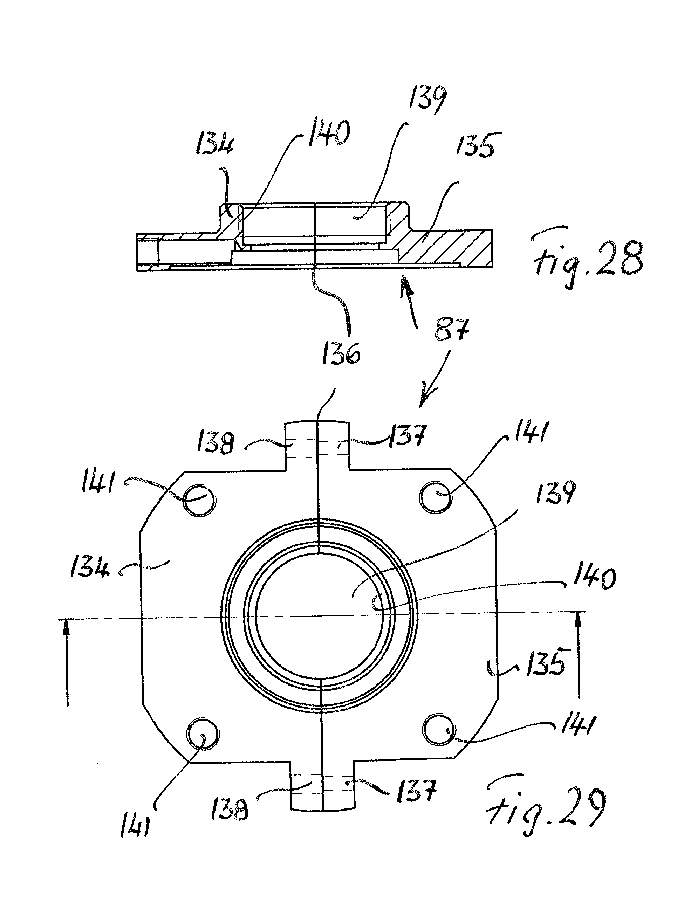

Ein zweiter Träger 126 als Träger der Durchsatzmesseinrichtung 15 ist in Figur 27 gesondert dargestellt: Er ist auch als Ringzylinderkörper gestaltet, weist einen Zylindermantel 127 auf, der zwei sich gegenüberliegende Stirnflächen 128 und 129 ausbildet und der eine mit Innengewinde 130 versehene Durchgangsbohrung 131 umgibt. An der Stirnfläche 129 sind vier Ausnehmungen 132 in Form eines Kreuzes angeordnet, die entsprechende Vorsprünge 133 Durchsatzmesseinrichtung 15 aufnehmen, so dass sie vom Träger 126 getragen und in das Innengewinde 20 des Anschlussstutzens 14 des Gehäuses 2 durch Drehen der Stange 112 eingeschraubt werden kann.

Im Falle der Ausbildung der Schleusenarmatur 83 nach der Variante B ist der Anschlussflansch 87 gemäss der Darstellung in Figur 28 ausgestaltet: Er besteht aus zwei Flanschhälften 134 und 135, die an einer Trennebene 136 aneinanderstossen und mittels je einer durch Löcher 137 und 138 greifender Passschrauben zusammengehalten werden. Eine Durchgangsbohrung 139 trägt ein Innengewinde 140, das als Aufnahmegewinde des korrespondierenden Aussengewindes am Gehäuse 2 dient. Die Teilung des Anschlussflansches 87 in zwei Flanschhälften 134 und 135 dient der Freigabe der Schleusenarmatur 83 nach dem Einsetzen der Durchsatzmesseinrichtung 15 mit dem Träger 127. Löcher 141 sind für Schrauben 88 vorgesehen.

Die Funktion der Schleusenarmatur 83 ist folgende:

Nach dem Ansetzen des Gehäuses 2 an die zu unterbrechende und mit einer Durchsatzmesseinrichtung 15 zu versehende unter Wasserdruck stehende Leitung 5 wird die Schleusenarmatur 83 mit ihrem Anschlussflansch 87 an den Anschlussstutzen 14 angesetzt und dort je nach Ausführungsvariante A oder B befestigt, so dass der in Fig. 2 dargestellte Zustand erreicht ist. Danach wird die Leitung 5 mit dem Fräser 114 angebohrt, die Stange 112 mit dem von ihrem Gewindeansatz getragenen Fräser 114 zurückgezogen und der Kugelkörper 97 mittels der Handhabe 100 in Sperrstellung gebracht. Anschliessend wird auf den Träger 113 gewechselt und der Ringschieber 18 gemeinsam mit dem Umlenkteil 58 in den Innenraum 13 eingebracht. Danach wird im gleichen Ablauf nach Überführung des Kugelkörpers 97 in dessen Sperrstellung der Träger 113 in den Träger 126 mit der Durchsatzmesseinrichtung 15 gewechselt und durch die Durchgangsbohrung 98 des Kugelkörpers 97 des dann wieder geöffneten Kugelhahnes 96 in den Anschlussstutzen 14 eingebracht und dort festgeschraubt. Alternativ kann im Bedarfsfall anstelle einer Durchsatzmesseinrichtung 15 der dann ohne das Umlenkteil 58 eingebrachte Ventileinsatz nach Figur 1 eingebracht werden, falls in eine unter Druck stehende Fluidleitung lediglich ein separates Absperrventil eingebaut werden soll.

Danach kann die Schleusenarmatur 83 mit ihrem Anschlussflansch 87 durch dessen Teilung nach Lösen der durch die Löcher 137 und 138 greifenden Schrauben abgezogen werden und die Durchsatzmesseinrichtung 15 respektive das eingebrachte Ventil ist funktionsfähig, ohne dass Wasser aus der unterbrochenen Leitung 5 ausgetreten ist.

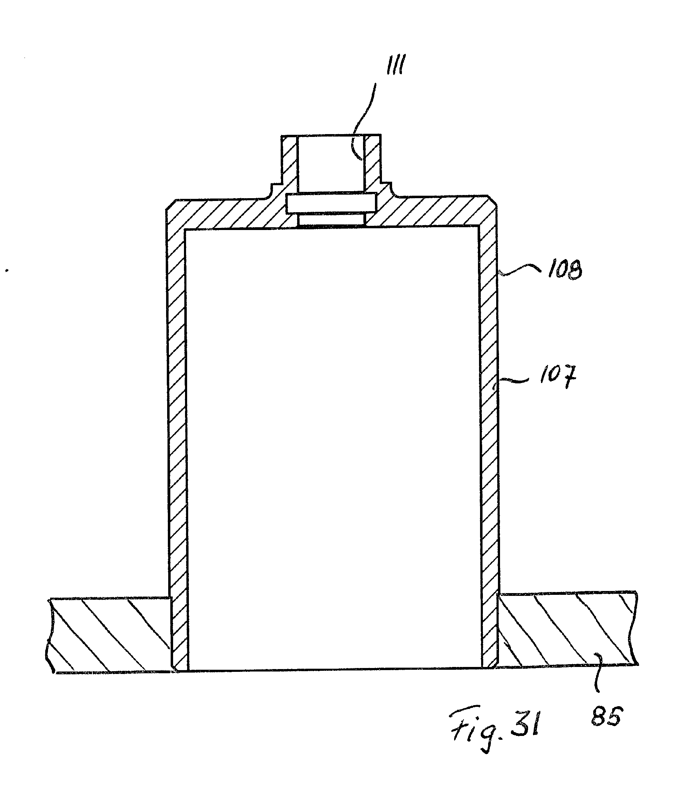

Die Fig. 31 zeigt eine Variante der Ausführung der Schleusenarmatur 83. Während nach Fig. 3 der Führungsdeckel 110 in ein Aussengewinde 109 des Aufsatzes 107 abnehmbar eingeschraubt ist, kann er einteilig mit dem Aufsatz 107 ausgebildet sein, so dass eine Gewindeverbindung eingespart werden kann.

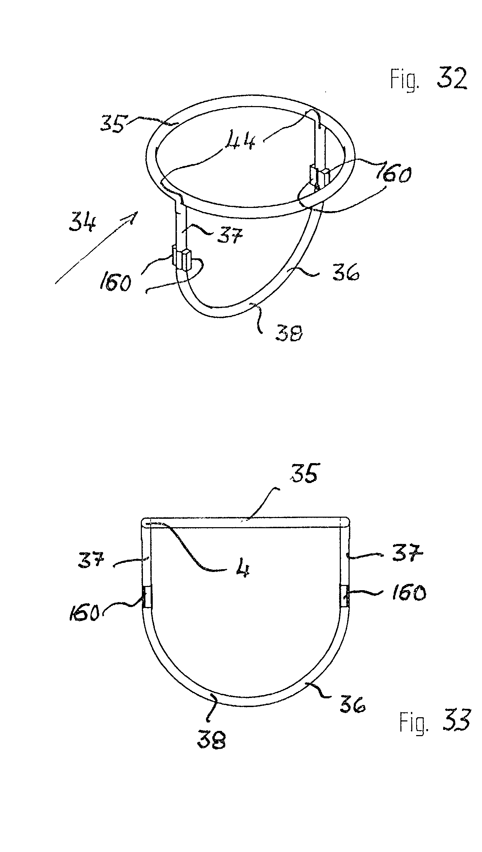

Um die Abdichtungswirkung der netzartigen Dichtung 34 im Bereich von Übergängen oder an anderweitigen kritischen Stellen in den Teilen zu verbessern, in denen Nuten vorhanden sind, in die die netzartigen Dichtungen 34 eingelegt sind, ist das Profil der netzartigen Dichtungen 34 dort gemäss Fig. 32 und 33 variiert: Das Dichtungsprofil besitzt dort flügelartige Ansätze 160, die, einander gegenüberliegend, sich vom Dichtprofil im Bereich des Bügels 36 forterstrecken.

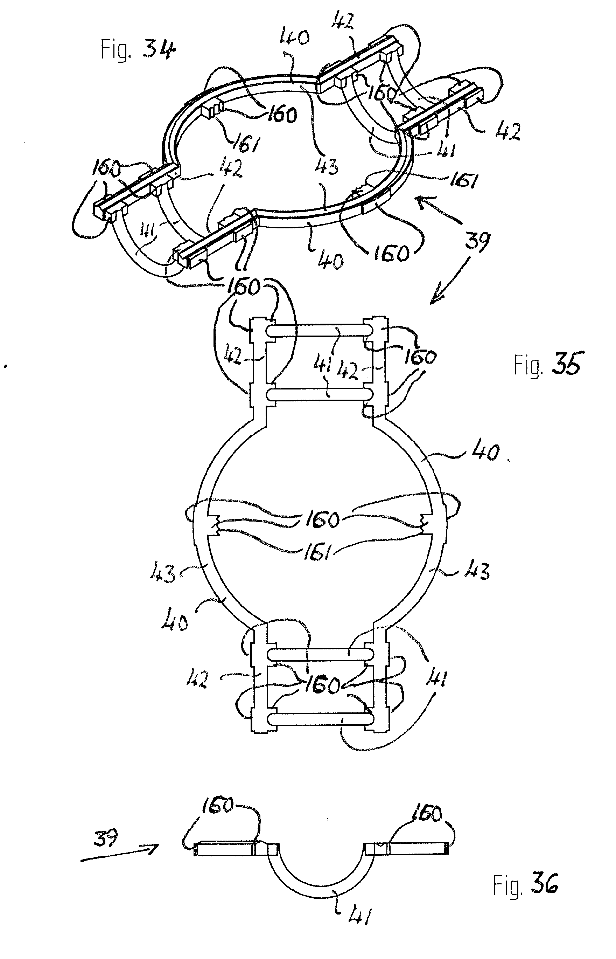

Das Gleiche ist gemäss einer analogen Variante der Erfindung bei der netzartigen Dichtung 39 gemäss Fig. 34 bis 36 vorgesehen: Auch hier sind flügelartige Ansätze 160 in dem gleichen Sinne, wie eben beschrieben, angeordnet. Ein Teil dieser flügelartigen Ansätze 160 ist mit Rippen 161 versehen, die sich quer zur Einschubrichtung der netzartigen Dichtung 39 gemäss Fig. 34 bis 36 erstrecken.

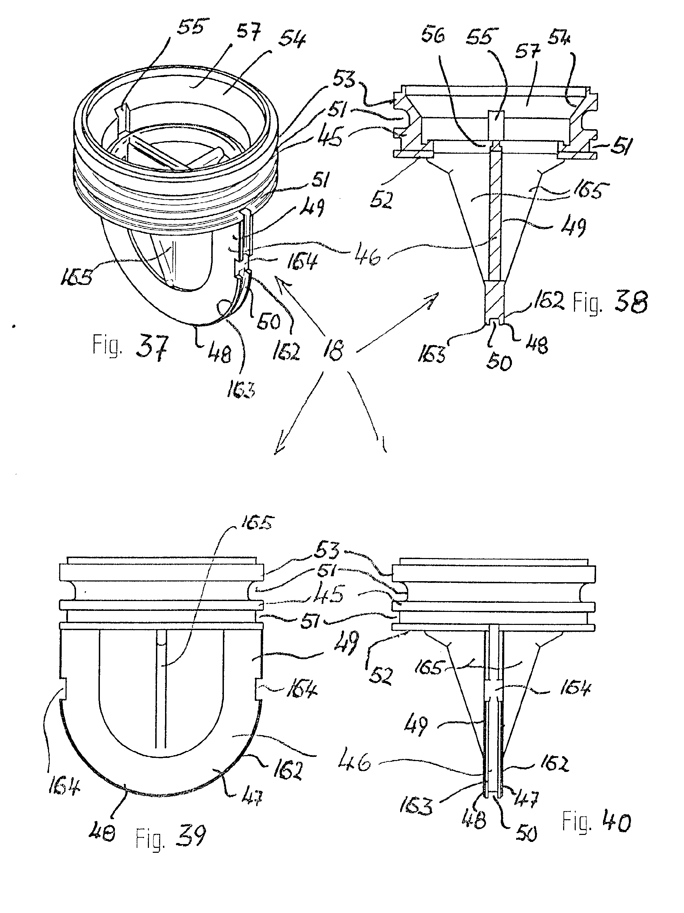

Diese eben beschriebenen Varianten der Ausformung der netzartigen Dichtungen 34 und 39 haben auch Auswirkungen auf die Formgebung der Ringschieber 18, die ausweislich der Fig. 37 bis 40 in Anpassung an die Dichtungen abgeändert sind. So weisen Stege 162 und 163, die Wände der Durchgangsnut 50 bilden, Unterbrechungen 164 auf, die die flügelartigen Ansätze 160 der netzartigen Dichtung 34 aufnehmen. Eine weitere Besonderheit des gegenüber den Fig. 16 bis 19 abgewandelten Ringschiebers 18 nach den Fig. 37 bis 40 liegt in der Abstützung des Trennteiles 46, auf dem der bis zu 11 bar betragende Wasserdruck herrscht, gegenüber dem Ringzylinderteil 45. Damit sich das Trennteil 46 nicht unter dem Wasserdruck verbiegt, sind Stützstege 165 beiderseits der Flächen des Trennteiles 46 angeordnet, die sich an der Innenmantelfläche 54 des Ringzylinderteiles 45 sowie an der Stirnfläche in seinem unteren Bereich 52 abstützen. Die Höhe des Ringzylinderteiles 45 ist im Übrigen verringert worden.

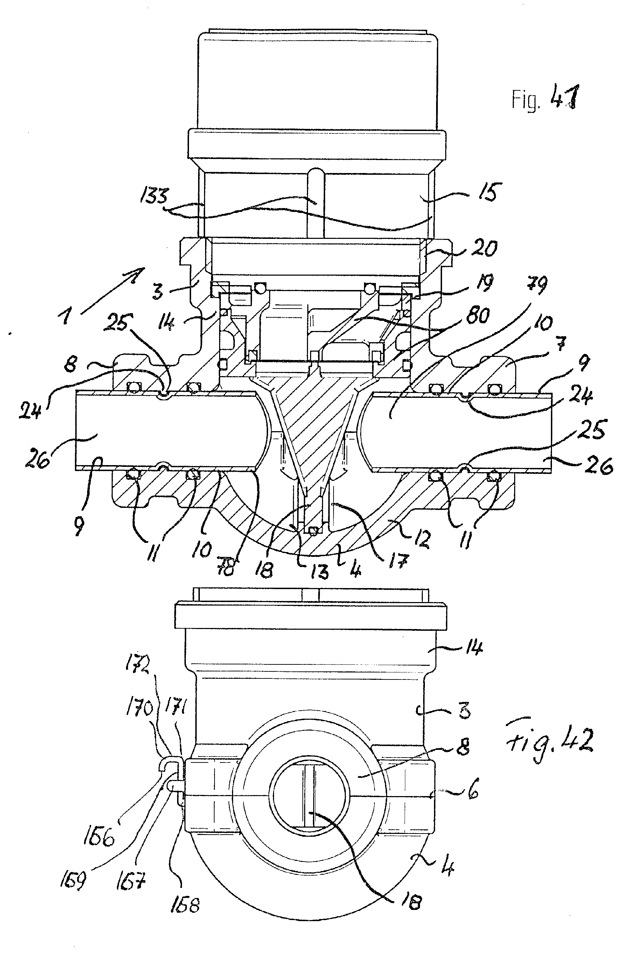

Weitere Abwandlungen im Bereich des Umlenkteiles 58 und des Gehäuses 2, die zur Anpassung an die netzartigen Dichtungen 39, seines Handlings und zur Optimierung der Strömung des Wassers sinnvoll sind, gehen aus den Fig. 41 und 42 hervor. So ist auch die axiale Erstrekkung des Umlenkteiles 58 verringert worden, die in ihm liegende Trennwand 68 ist strömungsgünstiger gestaltet worden.

Die Verbindung von Oberteil 3 und Unterteil 4 ist durch eine Einhakverbindung verbessert worden, wobei am Unterteil 4 seitlich ein Haken 166 angeformt wurde, der in eine gleichfalls seitlich aber am Oberteil 3 angeformte Öse 167 greift. Der Haken 166 weist nahe seiner Verbindung 168 mit dem Unterteil 4 einen geraden, sich parallel aber im Abstand zur Wandung des Unterteiles 4 sich über die Trennebene 6 sich erstreckenden Bereich 169 auf, der in die eigentliche, vom Oberteil 3 fortgebogene Hakenklaue 170 übergeht. Dieser Übergang 171 ist rechtwinklig aber mit sehr kleinem Radius gestaltet, die sich hieran nach einem weiteren, gegenüber dem eben beschriebenen deutlich kleinerem, geraden weiteren Bereich 172 anschliessende Hakenklaue 170 besitzt einen demgegenüber merklich grösseren Biegeradius. Diese gelenkige Verbindung des Oberteiles 3 mit dem Unterteil 4 mittels Haken 166 und Öse 167 erlaubt ein besseres Handling beim Aufsetzen der Armatur auf das das Medium führende Rohr der Leitung 5. Es wird quasi eine sogenannte Einhand-Montage erreicht.

Somit ist es möglich, das Oberteil 3 zum Unterteil 4 erst zu verschwenken und danach gegeneinander zu schieben.

## Patentansprüche

1. In eine fluidführende Leitung ( 5 ) eingesetzte Durchsatzmesseinrichtung ( 15 ) für das Fluid mit einem Gehäuse ( 2 ), das zwei fluchtende Anschlussstutzen ( 7, 8 ) für Enden ( 78, 79 ) der Leitung ( 5 ) und einen weiteren Stutzen ( 14 ) für die Durchsatzmesseinrichtung ( 15 ) aufweist und welches einen Einsatz ( 80 ) aufnimmt, der die Anschlussstutzen ( 7 und 8 ) unter Abdichten gegeneinander mit Anschlüssen der Durchsatzmesseinrichtung ( 15 ) verbindet, **dadurch gekennzeichnet, dass** der Einsatz ( 80 ) zweiteilig ausgebildet ist, aus einem Ringschieber ( 18 ) und einem Umlenkstück ( 58 ) besteht, die beide zusammen eine über eine Nut-Steg-Verbindung ( 55/81 ) ineinandersteckbare Baugruppe bilden, die an mit einer Innenwand des Gehäuses ( 2 ) in Berührung kommenden Aussenflächen Nuten ( 50, 51 ) zur Einlage einer Dichtung ( 34 ) aufweist.

2. Durchsatzmesseinrichtung ( 15 ) nach Anspruch 1, **dadurch gekennzeichnet, dass** je eine weitere Dichtung ( 39 ) in Nuten ( 11, 29 ) im Ober- und Unterteil ( 3, 4 ) des Gehäuses ( 2 ) eingelegt ist, die die gemeinsam die beiden Enden ( 78 und 79 ) der Leitung ( 5 ) umfassen.

3. Durchsatzmesseinrichtung ( 15 ) nach Anspruch 2, **dadurch gekennzeichnet, dass** die Dichtungen ( 34 und 39 ) netzartig als dreidimensionale Gebilde geformt sind.

4. Durchsatzmesseinrichtung ( 15 ) nach Anspruch 1, **dadurch gekennzeichnet, dass** in beiden Stirnseiten ( 59, 60 ) des Umlenkstückes ( 58 ) Nuten ( 62, 71, 72 ) vorgesehen sind, in die weitere Dichtungen ( 73 ) eingelegt sind.

5. Durchsatzmesseinrichtung ( 15 ) nach Anspruch 1, **dadurch gekennzeichnet, dass** das Gehäuse ( 2 ) zweiteilig mit in der Achse der fluidführenden Leitung ( 5 ) liegender Trennebene ( 6 ) ausgebildet ist und dass die beiden Gehäuseteile ( 3, 4 ) gemeinsam die Enden ( 78 und 79 ) der Leitung ( 5 ) umfassen und an den zueinander weisenden Seiten mit Vorsprünge ( 27 ) aneinander geführt sind.

6. Durchsatzmesseinrichtung ( 15 ) nach Anspruch 1, **dadurch gekennzeichnet, dass** an der Innenfläche ( 10 ) der Anschlussstutzen ( 7, 8 ) eine Klemmnase ( 24 ) angeformt ist, die in je eine ringnutartige Kerbe ( 25 ) in den Enden des Rohres ( 26 ) der Leitung ( 5 ) eingreifen.

7. Durchsatzmesseinrichtung ( 15 ) nach Anspruch 1 oder 5, **dadurch gekennzeichnet, dass** das Oberteil ( 3 ) und das Unterteil ( 4 ) des Gehäuses ( 2 ) mit einer Einhakverbindung gelenkig miteinander verbunden sind.

8. Durchsatzmesseinrichtung ( 15 ) nach einem der Ansprüche 1, 5 oder 7, **dadurch gekennzeichnet, dass** die Einhakverbindung aus einem entweder am Ober- oder Unterteil ( 3 oder 4 ) angeordneten Haken ( 166 ) und einer am anderen Teil ( 4 oder 3 ) angeordneten Öse ( 167 ) besteht, wobei der Haken ( 166 ) zwischen seiner Verbindungsstelle ( 168 ) mit dem Ober- oder Unterteil ( 3 oder 4 ) und der Hakenklaue ( 172 ) ein geraden Bereich ( 169 ) aufweist.

9. Durchsatzmesseinrichtung ( 15 ) nach einem der Ansprüche 1 bis 3, **dadurch gekennzeichnet, dass** die in Nuten ( 62, 71 und 72 ) eingelegten Dichtungen ( 34, 39 ) bereichsweise flügelartige Ansätze ( 160 ) aufweisen.

10. Durchsatzmesseinrichtung ( 15 ) nach einem der Ansprüche 1 bis 3, **dadurch gekennzeichnet, dass** die Nuten ( 62, 71 und 72 ) von Stegen ( 162 und 163 ) begrenzt sind, die im Bereich der flügelartigen Ansätze ( 160) Unterbrechungen ( 164 ) aufweisen.

11. Durchsatzmesseinrichtung ( 15 ) nach Anspruch 1, **dadurch gekennzeichnet, dass** das Umlenkstück ( 58 ) aus einem Ringzylinderteil ( 45 ) und einem scheibenförmigen Trennteil ( 46 ) besteht, welches beidseitig der Scheibenflächen Stützstege ( 165 ) aufweist.

12. Schleusenarmatur ( 83 ) für eine in eine fluidführende Leitung ( 5 ) einzusetzende Durchsatzmesseinrichtung ( 15 ) mit einem eine Absperrvorrichtung ( 96 ) aufnehmenden Kämmergehäuse ( 84 ) und einem Anschlussflansch ( 87 ), der an einem Anschlussstutzen ( 14 ) des Gehäuses ( 2 ) angesetzt ist, **dadurch gekennzeichnet, dass** der Anschlussflansch ( 87 ) den Anschlussstutzen ( 14 ) umschliesst und mit wenigstens drei Vorsprüngen ( 90 ) versehen ist, die zwischen sich und dem Aussenumfang ( 93 ) des Anschlussstutzens ( 14 ) einen mit einer Schrägfläche versehenen Ring ( 92 ) lagern, der von in den Vorsprüngen ( 90 ) gelagerten Stellschrauben ( 91 ) hintergriffen ist.

13. Schleusenarmatur ( 83 ) nach Anspruch 12, **dadurch gekennzeichnet, dass** der Anschlussflansch ( 87 ) geteilt ausgeführt ist und dass die beiden Flanschhälften ( 134 ) und ( 135 ), an einer Trennebene ( 136 ) aneinanderstossen und mittels je einer durch Löcher ( 137 und 138 ) in den Flanschhälften ( 134 ) und ( 135 ) greifende Schrauben zusammengehalten sind.

14. Schleusenarmatur ( 83 ) nach Anspruch 12 oder 13, **dadurch gekennzeichnet, dass** auf einer Stange ( 112 ) eine Führungsscheibe ( 119 ) drehbar und axialverschieblich gelagert ist, die ein mittels eines Gewindeansatzes an der Stange ( 112 ) befestigtes Bohr- oder Fräswerkzeug oder mittels eines Trägers ( 114 ) an der Stange (112 ) befestigtes Umlenkteil ( 58 ) oder befestigte Durchsatzmesseinrichtung ( 15 ) führen.

15. Schleusenarmatur ( 83 ) nach einem der Ansprüche 12 bis 14, **dadurch gekennzeichnet, dass** die Axialverschieblichkeit der Führungsscheibe ( 119 ) durch zwei im Abstand voneinander vorgesehene in Nuten der Stange ( 112 ) gelagerte Ringe begrenzt ist.

16. Schleusenarmatur ( 83 ) für ein in eine fluidführende Leitung ( 5 ) einzusetzendes Ventileinsatz ( 150 ) mit einem eine Absperrvorrichtung ( 96 ) aufnehmenden Kammergehäuse ( 84 ) und einem Anschlussflansch ( 87 ), der an einem Anschlussstutzen ( 14 ) des Gehäuses ( 2 ) angesetzt ist, **dadurch gekennzeichnet, dass** der Anschlussflansch ( 87 ) den Anschlussstutzen ( 14 ) umschliesst und mit wenigstens drei Vorsprüngen ( 90 ) versehen ist, die zwischen sich und dem Aussenumfang ( 93 ) des Anschlussstutzens ( 14 ) einen mit einer Schrägfläche versehenen Ring ( 92 ) lagern, der von in den Vorsprüngen ( 90 ) gelagerten Stellschrauben ( 91 ) hintergriffen ist.
